Europäisches Patentamt

European Patent Office

Office européen des brevets

(11) Veröffentlichungsnummer: **0 070 504**
**A2**

(12) **EUROPÄISCHE PATENTANMELDUNG**

(21) Anmeldenummer: **82106269.2**

(22) Anmeldetag: **13.07.82**

(51) Int. Cl.³: **C 09 D 11/00**

(30) Priorität: **16.07.81 DE 3128231**

(43) Veröffentlichungstag der Anmeldung: **26.01.83**
**Patentblatt 83/4**

(84) Benannte Vertragsstaaten: **FR GB IT NL SE**

(71) Anmelder: **SIEMENS AKTIENGESELLSCHAFT, Berlin und München Wittelsbacherplatz 2, D-8000 München 2 (DE)**

(72) Erfinder: **Orth, Gerhard, Dr. Chem., Johann-Strauss-Weg 24, D-8192 Geretsried (DE)**

(54) **Tinten für Tintenstrahlschreibeinrichtungen.**

(57) Zum Beschreiben von aus stark geleimten Papier oder aus Folien bestehenden Aufzeichnungsträgern in Tintenschreibeinrichtungen, bei denen die Tinte aus feinen Düsen gegen den Aufzeichnungsträger gespritzt wird, wird eine Tinte verwendet, die aus einem Lösungsmittel besteht, das 1 bis 99% Cyclohexanol oder Cyclohexanolderivate, Äthylenglykol und einen substantiven Farbstoff enthält; die Tinte löst Leim oder Kunststoff an, ermöglicht ein schnelles Eindringen des Farbstoffes in die zellulose Faser des Aufzeichnungsträgers, ist schnell trocknend und liefert ein wischfestes Schriftbild.

0070504

SIEMENS AKTIENGESELLSCHAFT

Berlin und München

Unser Zeichen

VPA 81 P 6766 DE

## Tinten für Tintenstrahlschreibeinrichtungen

Die Erfindung betrifft eine Tinte, basierend auf einer, in einem Lösungsmittelgemisch unter Einwirkung eines Lösungsvermittlers gelösten Farbstoffes für Tintenschreibeinrichtungen, bei denen in einer Ausstoßkammer des vom Aufzeichnungsträger abgehobenen Schreibkopfes durch Ansteuerung eines piezoelektrischen Antriebselementes kurzzeitig Druckimpulse erzeugt, Tintentröpfchen an einer Tintenöffnung abgegeben und gegen den Aufzeichnungsträger gespritzt werden.

Von den sogenannten berührungslosen Druckverfahren hat ein Verfahren an Bedeutung gewonnen, das im wesentlichen darauf beruht, daß die Schreibflüssigkeit tröpfchenförmig aus einer oder aus mehreren Düsen eines vom Aufzeichnungsträger abgehobenen Schreibkopfes gegen einen normalerweise bewegten Aufzeichnungsträger gespritzt wird und dort ein rasterförmiges Zeichen bildet. Ein solches Verfahren ist beispielsweise in der Siemens-Zeitschrift, Heft 4, April 1977, Seiten 219 bis 221 beschrieben.

Zur Ansteuerung der Schreibdüsen und damit zur Auslösung eines Tröpfchenausstoßes hat es sich bewährt, den piezoelektrischen Effekt auszunutzen. Ein nach diesem Prinzip arbeitender Schreibkopf ist z.B. in der DE-OS 25 43 451 beschrieben.

Für die Zusammensetzung der in solchen Schreibeinrichtungen verwendeten Tinte, spielt es eine Rolle, daß als Aufzeichnungsmaterial normalerweise Schreibpapier beschrieben werden soll. Für einen solchen Einsatzfall kommen z.B.

Fk 1 Obh / 15.7.1981

wässerige Lösungen von Farbstoffen als Tinte in Frage. Wässerige Tinten haben jedoch den Nachteil, daß sie im Laufe der Zeit eintrocknen, was zur Verstopfung der sehr feinen Düsen des Schreibkopfes führen kann. Außerdem können Schreibeinrichtungen, die mit wässerigen Tinten als Schreibflüssigkeit betrieben werden, nur innerhalb eines oberhalb des Gefrierpunktes liegenden Temperaturbereiches eingesetzt werden. Damit ist die Einsatzmöglichkeit der Tintenschreibeinrichtungen beschränkt. Eine andere bekannte Tinte (DE-OS 27 55 733) vermeidet diese Nachteile dadurch, daß eine Farbstoffsäure und ein Lösungsvermittler in einem Lösungsmittelgemisch aus Diäthylenglykol und Dimetylsulfoxid gelöst sind. Diese wasserfreie Tintenflüssigkeit hat eine Viskosität zwischen 15cP und 100cP und weist hygroskopisches Verhalten auf. Sie ist besonders für Tintenschreibeinrichtungen geeignet, bei denen in der Ausstoßkammer während der Schreibpausen Unterdruck besteht und ein Tröpfchenausstoß durch einen kurzzeitigen Druckanstieg erzeugt wird. Nachteilig ist dabei allerdings, daß diese Tinte für eine Aufzeichnung auf stark geleimten Papier, auf Folien oder auf Kunststoffschichten nicht optimal geeignet ist. Der Grund dafür liegt darin, daß die Oberflächen solcher Aufzeichnungsträger von der Tinte nicht angelöst werden, damit kein oder nur ein sehr schwaches und langsames Eindringen in den Aufzeichnungsträger erfolgt und infolgedessen eine Trocknung der Schrift nicht oder doch nur sehr langsam stattfinden kann. Es wäre nun denkbar, dieses Problem durch die Verwendung von einen Farbstoff enthaltenden härtbaren Kunststoffharzlösungen, beispielsweise Acrylharzlösungen, zu lösen. Allerdings besteht dann die Gefahr des Verklebens der sehr engen Düsenöffnungen, was erfordert, daß besondere Maßnahmen, beispielsweise Abdeckungen der Düsenöffnungen, vorgesehen werden müssen.

Der Erfindung liegt die Aufgabe zugrunde, eine Tinte für Tintenschreibeinrichtungen gemäß dem Oberbegriff des Pa-

0070504

tentanspruches 1 anzugeben, mit der eine Beschriftung von geleimtem Papier, von Folien oder von mit Kunststoff beschichtetem Material möglich ist, ohne daß eine lange Trockenzeit nach dem Aufbringen der Flüssigkeit auf dem Aufzeichnungsträger auftritt, und ohne daß ein Verkleben der Schreibdüsen zu befürchten ist. Diese Aufgabe wird gemäß dem Kennzeichen des Patentanspruches 1 gelöst.

Als Lösungsmittel wird mit Vorteil Cyclohexanol oder ein Derivat davon verwendet.

Zur Erläuterung der Erfindung wird davon ausgegangen, daß üblicherweise jedes Aufzeichnungspapier einen gewissen Anteil an Leim aufweist. Zum einen erhöht Leim die Stabilität des Papieres, indem die Zellulosefasern zusammengehalten werden, und zum anderen vermeidet man damit ein unkontrolliertes Verlaufen der Schreibflüssigkeit auf dem Papier. Mit zunehmendem Leimanteil wird allerdings die Aufnahme und die Verteilung des in der Schreibflüssigkeit enthaltenen Farbstoffes beeinträchtigt. Das ist im wesentlichen dadurch bedingt, daß der Leim zum einen keine homogene Oberfläche bildet, und zum anderen Farbstoffe nur unvollkommen aufnimmt. Praktisch breitet sich der mit der Schreibflüssigkeit auf das Papier gebrachte Farbstoff nur um den sozusagen in Flecken abgelagerten Leim herum aus. Die Schriftzeichen weisen somit unvollständig gefärbte Stellen auf, was sich in einer Verschlechterung des Schriftbildes äußert. Die auf den Leimflecken angelagerten, nicht färbenden Anteile der Schreibflüssigkeit dagegen verfließen nicht sofort, sondern verflüchtigen sich nur langsam. Das führt zu einer längeren Trockenzeit und im praktischen Einsatz dazu, daß die Schrift nicht unmittelbar nach dem Schreiben wischfest ist. Diese Ausführungen gelten im Prinzip auch für Folien oder für kunststoffbeschichtete Aufzeichnungsträger.

Die neue Tinte bewirkt auf Grund des erfindungsgemäß verwendeten Lösungsmittels, vorzugsweise Cyclohexanol oder Cyclohexanolderivate, eine ausgesprochen gute Anlösung des Leim- oder des Kunststoffbestandteiles eines Aufzeichnungsträgers. Daran ist entscheidend die H-Gruppe des Cyclohexanols beteiligt, die sowohl eine Bindung zu Wasser als auch zu Kohlenwasserstoffen eingeht. Schreibflüssigkeiten mit Cyclohexanol als Lösungsmittel lösen auf Grund dieser Eigenschaften die Leiminseln auf dem Aufzeichnungspapier oder die Kunststoffschichten auf einem Aufzeichnungsträger an und ermöglichen, daß der Farbstoff unmittelbar an die Zellulosefasern des Aufzeichnungsträgers gelangt. Eine zusätzliche Behandlung des Aufzeichnungsträgers wie beispielsweise eine Wärmeeinwirkung, oder eine Einwirkung mit UV-Licht, ist nicht erforderlich. Die Trocknung geschieht vielmehr durch Eindringen oder durch Verdunsten des Lösungsmittels. Damit ist die Schrift selbst beim Beschreiben von Folien unmittelbar nach dem Aufbringen der Schriftzeichen wischfest.

Als Lösungsmittel wird ein Lösungsmittelgemisch verwendet, das aus Äthylenglycol und aus Cyclohexanol bzw. aus Cyclohexanolderivaten besteht, wobei der Anteil des Cyclohexanols bzw. der Cyclohexanolderivate zwischen 1% und 99% des Lösungsmittelgemisches beträgt.

Als besonders vorteilhaft hat sich eine Tintenzusammensetzung erwiesen, die aus etwa 50 Teilen Cyclohexanol, aus etwa 50 Teilen Äthylenglycol und aus etwa 6 Teilen eines substantiven Farbstoffes besteht.

4 Patentansprüche

Patentansprüche

1. Tinte, basierend auf einer in einem Lösungsmittelgemisch unter Einwirkung eines Lösungsvermittlers gelösten Farbstoffes für Tintenschreibeinrichtungen, bei denen in einer Ausstoßkammer des vom Aufzeichnungsträger abgehobenen Schreibkopfes durch Ansteuerung eines piezoelektrischen Antriebselementes, kurzzeitig Druckimpulse erzeugt, Tintentröpfchen an einer Düsenöffnung abgegeben und gegen den Aufzeichnungsträger gespritzt werden,
d a d u r c h   g e k e n n z e i c h n e t , daß das Lösungsmittelgemisch ein zusätzliches Lösungsmittel enthält, das eine Leim- und/oder Kunststoffschichten mindestens teilweise auflösende Wirkung besitzt.

2. Tinte nach Anspruch 1,
d a d u r c h   g e k e n n z e i c h n e t , daß als Lösungsmittel Cyclohexanol verwendet wird.

3. Tinte nach Anspruch 1,
d a d u r c h   g e k e n n z e i c h n e t , daß als Lösungsmittel Cyclohexanolderivate verwendet werden.

4. Tinte nach einem der Ansprüche 2 bis 3,
d a d u r c h   g e k e n n z e i c h n e t , daß die Tinte aus etwa 50 Teilen Cyclohexanol, aus etwa 50 Teilen Äthylenglykol und aus etwa 6 Teilen eines substantiven Farbstoffes besteht.